# FASCICULE DE BREVET EUROPEEN

(11) **EP 2 342 794 B1**
(45) Date de publication et mention de la délivrance du brevet: **28.04.2021**
(21) Numéro de dépôt: 09748378.8
(22) Date de dépôt: 01.10.2009
(51) Int. Cl.: H02J 4/00

(54) **PROCÉDÉ D'ORGANISATION D'UN RÉSEAU ÉLECTRIQUE COMPORTANT PLUSIEURS GÉNÉRATEURS, RÉPARTITEUR ET INSTALLATIONS.**
VERFAHREN ZUM ORGANISIEREN EINES ELEKTRISCHEN NETZWERKS MIT MEHREREN GENERATOREN, VERTEILERBLÖCKEN UND GERÄTEN
METHOD FOR ORGANISING AN ELECTRIC NETWORK INCLUDING A PLURALITY OF GENERATORS, DISTRIBUTION BLOCK AND EQUIPMENT

(30) Priorité: 01.10.2008 FR 0805435
(43) Date de publication de la demande: 13.07.2011
(73) Titulaire: Novatec SA, 82000 Montauban (FR); Carrillo, Jean-Jacques, 82000 Montauban (FR); Michel, Stéphane, 31700 Beauzelle (FR)
(72) Inventeur: CARRILLO, Jean-Jacques, 82000 Montauban (FR)
(74) Mandataire: Ipside
(86) Numéro de dépôt international: PCT/FR2009/001172
(87) Numéro de publication internationale: WO 2010/037934

(56) Documents cités:
- WO-A1-2004/040731
- FR-A- 2 911 847
- US-A1- 2002 128 759
- US-A1- 2003 216 876
- US-A1- 2005 116 541
- ANDERSON P M ET AL: "Automated power distribution system hardware" 19890806; 19890806 - 19890811, 6 août 1989 (1989-08-06), pages 579-584, XP010089773

## Description

### Domaine technique

La présente invention est du domaine des procédés et des moyens utilisés pour l'alimentation électrique de plusieurs charges électriques au travers d'un réseau par exemple un réseau pour milieux confinés tel que décrit dans la demande de brevet déposée ce même jour par le demandeur pour « Nouvelle architecture de réseau électrique pour milieux confines incorporant des sources d'énergie électrique ».

Dans la suite de la présente description, il faut entendre par générateur une source d'énergie électrique, ainsi une phase d'une source électrique mono ou polyphasée est assimilable dans ce qui suit à un générateur.

### Etat de la technique antérieure.

Typiquement, les réseaux électriques connus pour aéronefs et autres, sont chacun organisés en arborescence de sorte que chaque charge électrique est connectée à une source d'énergie électrique par plusieurs conducteurs électriques agencés en série formant par exemple, depuis la source d'énergie électrique, une barre, une branche ou sous barre et une ramification R, ces différentes barre branches ou sous barres peuvent être redondées pour des raisons de sécurité.

### Exposé de l'invention

### Problème technique

Actuellement, les dispositifs utilisés en cas de coupure d'alimentation reposent le plus souvent sur des systèmes de secours (onduleurs par exemple), qui prennent le relais de l'alimentation électrique en cas de défaillance ou d'arrêt de celle-ci, ou bien des redondances d'alimentation pour les charges critiques tels que les dispositifs décrits dans le brevet FR 2 911 847 A (Hispano Suiza). On ne connaît pas de dispositifs contenant plus de deux générateurs capables de répartir de façon équitable tous les sous-réseaux existants entre les générateurs disponibles quel que soit le nombre de générateurs défaillants ou jugés indisponibles. On s'attachera à limiter le nombre de réaffectations de sous réseaux de telle sorte que seuls les sous réseaux connectés à un ou plusieurs générateurs qui deviennent indisponibles sont réaffectés aux générateurs disponibles

Le brevet FR 2 844 401 A (Electricité de France [FR]) du 12 Mars 2004 n'a pour objet que d'assurer le transfert d'énergie provenant d'un réseau de distribution à trois arrivées indépendantes sur deux départs et non pas de répartir des départs de façon équitable sur les arrivées du réseau de distribution car par définition, il faudrait alors au moins trois départs avec trois arrivées pour que chacune des arrivées délivre une même quantité d'énergie.

Le document WO 2004/040731 A1 présente un dispositif et un procédé de gestion des anomalies dans un réseau de distribution électrique. Dans ce dispositif le réseau détermine des segments interconnectés et des nœuds comportant des moyens de commutation pour isoler ou raccorder des segments entre eux. Le dispositif dispose en outre sur les segments et les nœuds de capteurs pour identifier et localiser des anomalies et dispose d'un réseau de communication entre les nœuds. En fonction d'anomalies détectées, le dispositif de agît sur les moyens de commutation pour isoler le défaut et reconfigure le réseau en reconstruisant une configuration en fonction de la ou les anomalies détectées. Ainsi la structure du réseau est recalculée dans chaque situation particulière, notamment en tenant compte de charges électriques réelles pour réaliser les commutations au niveau des nœuds. Il n'y a pas donc pas dans ce document de partage du réseau en sous-réseau a priori, mais la construction de sous réseaux modifiables en fonction des circonstances. Dans ce contexte le comportement de l'installation n'est pas déterminé a priori et sera différent, en cas de panne d'un générateur, en fonction de variables mesurées traduisant le fonctionnement du réseau à un instant donné.

Le document US 2002/0128759 A1 décrit une architecture de distribution conventionnelle comportant plusieurs générateurs et dans laquelle chaque générateur distribue, en fonctionnement nominal, un réseau alimentant un ensemble de charges. Dans ce document, lorsqu'un générateur est défaillant, le réseau qu'il alimente est basculé globalement sur un autre des générateurs et un système de gestion de la puissance déleste si besoin certaines des charges.

### Solution technique

La présente invention à pour objet de résoudre le problème sus évoqué en proposant un procédé et des moyens d'alimentation et de répartition permettant de répartir l'énergie de plusieurs sources sur un réseau tout en assurant la continuité de l'alimentation en cas de panne ou de coupure de l'une des sources. Les dites sources se répartissant, en cas de panne ou d'indisponibilité de l'une ou de plusieurs d'entre-elles, l'ensemble des sous réseaux qui doivent être secourues.

Selon l'invention cet objet est attiré avec un procédé de distribution d'énergie électrique dans un réseau divisé en sousréseaux dans lequel réseau n générateurs, n égal ou supérieur à trois, alimentent le réseau lorsque les dits générateurs sont disponibles, selon la revendication indépendante 1, et une installation de distribution d'énergie électrique correspondante selon la revendication indépendante 3.

Selon l'invention, si le générateur de rang 1 de la combinaison ou premier générateur est défaillant le générateur de rang 2 prendra le relais pour alimenter le sous réseau correspondant et si le générateur de rang 2 est indisponible le générateur de rang 3 prendra le relais et ainsi de suite.

Ces combinaisons (au nombre maximum de factorielle n pour n générateurs) permettent de répartir les charges d'un générateur indisponible sur les autres générateurs de façon équitable dans la mesure où les charges affectées à chaque sous réseau ont des consommations comparables.

Selon l'invention, un moyen de contrôle en vue de la commande du moyen de sélection fait appel à des tables de pré-caractérisation du réseau. Il est possible d'affecter certaines parties du réseau à des combinaisons particulières puisées dans ces tables. Il sera possible ainsi d'équilibrer le réseau et les générateurs et de réaliser une ségrégation entre les différentes parties du réseau.

De plus si le réseau comporte des générateurs de différentes puissances on pourra pondérer le nombre de câbles des différents sous réseau par les ratios de puissance des différents générateurs.

Dans un aspect qui ne fait pas partie de sa portée, l'exposé de l'invention se rapporte également à un répartiteur de sources d'énergies auto secourues.

Ce répartiteur est caractérisé essentiellement en ce qu'il comprend plusieurs permutateurs comportant chacun une sortie, une première entrée et une seconde entrée, lesdits permutateurs étant agencés en cascade selon un ordre prédéterminé et étant aptes à être associés chacun à un générateur dédié, ladite sortie de chaque permutateur étant destinée à être connectée à l'un des sous réseaux d'un réseau, la première entrée étant connectée sur le générateur associé et la seconde entrée étant connecté à la sortie du permutateur suivant dans l'ordre de la cascade, la sortie du permutateur étant commutée soit sur la première entrée lorsque le générateur est rendu disponible, soit sur la seconde entrée dans le cas contraire.

Par sa sortie chaque permutateur peut être connecté à un sous réseau, et les divers sous réseaux associés au répartiteur sont alimentés par les différents générateurs. L'ordre dans lequel les générateurs peuvent être permutés est déterminé par l'ordre dans lequel les permutateurs sont mis en cascade. Si maintenant l'un des générateurs est rendu indisponible, par exemple du fait d'une panne, le permutateur associé retire ce générateur de la série ordonnée initiale en connectant sa sortie à une autre permutateur par l'intermédiaire de sa deuxième entrée. De cette manière la continuité de l'alimentation du sous réseau associé au générateur défaillant se trouve assurée jusqu'au dernier générateur disponible dans sa série ordonnée.

Selon une autre caractéristique qui ne fait pas partie de la portée de l'invention, la seconde entrée de l'un au moins des permutateurs est connectée à la sortie d'un permutateur précédent dans l'ordre de la cascade.

Selon une autre caractéristique qui ne fait pas partie de la portée de l'invention, la seconde entrée du dernier permutateur dans l'ordre de la cascade est connectée à la sortie du premier permutateur dans l'ordre de la cascade formant un ordre de permutation circulaire.

Selon une autre caractéristique qui ne fait pas partie de la portée de l'invention, la seconde entrée du dernier permutateur dans l'ordre de la cascade est connectée à la sortie d'un permutateur autre que le premier dans l'ordre de la cascade.

On réalise ainsi des combinaisons incomplètes pouvant satisfaire des conditions particulières d'utilisation. C'est ainsi que la suppression d'un permutateur et du générateur associé dans un des groupes de permutations circulaires conduit au délestage de tous les sous réseaux associés aux autres permutateurs de ce groupe lorsque l'ensemble des générateurs restants sont indisponibles.

De même l'insertion d'un permutateur et son générateur dans un groupe de permutation permet au sous réseau de ce même groupe et uniquement de celui ci de pouvoir être alimenté par ce générateur. On peut réaliser ainsi une fonction de secours pour des charges essentielles.

Il sera également possible d'intercaler électriquement entre une sortie de répartiteur et le sous réseau correspondant, un permutateur associé à une source d'énergie électrique. Cette disposition par une commande permettra d'alimenter ce sous réseau non plus à partir de la sortie correspondante du répartiteur mais directement à partir de cette source laquelle peut être constituée par un générateur, ou bien encore par une autre des sorties du répartiteur.

Selon une autre caractéristique qui ne fait pas partie de la portée de l'invention, la seconde entrée du dernier permutateur dans l'ordre de la cascade est connectée à la sortie d'un permutateur autre que le premier dans l'ordre de la cascade.

Selon une autre caractéristique qui ne fait pas partie de la portée de l'invention, l'ensemble de toutes les permutations circulaires possibles fournit toutes les permutations possibles.

On réalise ainsi un répartiteur complet à partir de l'ensemble des groupes de permutation circulaire correspondant aux différents générateurs. Chacun des groupes de permutation circulaire peut alimenter un nombre de sous réseaux différents égal au nombre de générateurs utilisés.

Selon une autre caractéristique qui ne fait pas partie de la portée de l'invention, plusieurs permutateurs peuvent être mécaniquement couplés entre eux et exploiter la même commande de permutation.

Une telle disposition permet entre autre d'exploiter des réseaux polyphasés par exemple des réseaux triphasés.

De plus, selon une autre caractéristique qui ne fait pas partie de la portée de l'invention, à chaque générateur sont associés plusieurs permutateurs dédiés, mécaniquement liés entre eux, exploitant la même commande de permutation.

Cette disposition permet de réduire le nombre de composants électromécaniques de permutation.

Le répartiteur tel que décrit trouve avantageusement son application pour l'alimentation en énergie électrique d'une installation.

Cette installation comporte un réseau divisé en sous réseaux et est remarquable notamment en ce que des sorties du répartiteur sont connectées chacune à sous réseau dédié, lequel comporte au moins un conducteur électrique.

### Description sommaire des figures et des dessins.

D'autres avantages et caractéristiques de l'invention apparaîtront à la lecture de la description d'une forme préférée de réalisation donnée à titre d'exemple non limitatif en se référant aux dessins annexés en lesquels :
- la figure 1 est vue schématique d'une installation pour la mise en œuvre du procédé selon l'invention,
- la figure 2 est une vue schématique d'un répartiteur selon l'invention,
- la figure 3 est une vue schématique d'un répartiteur complet c'est-à-dire présentant toutes les permutations possibles dans un aspect qui ne fait pas partie de la portée de l'invention,
- la figure 4 est une vue schématique d'une installation mettant en œuvre un répartiteur dans un aspect qui ne fait pas partie de la portée de l'invention,
- la figure 5 est une vue schématique d'un mode d'alimentation d'une charge par deux groupes de permutation, dans un aspect qui ne fait pas partie de la portée de l'invention,
- la figure 6 est une vue d'un mode d'alimentation de plusieurs charges à partir d'un disjoncteur en tranche.

### Meilleure manière de réaliser l'invention

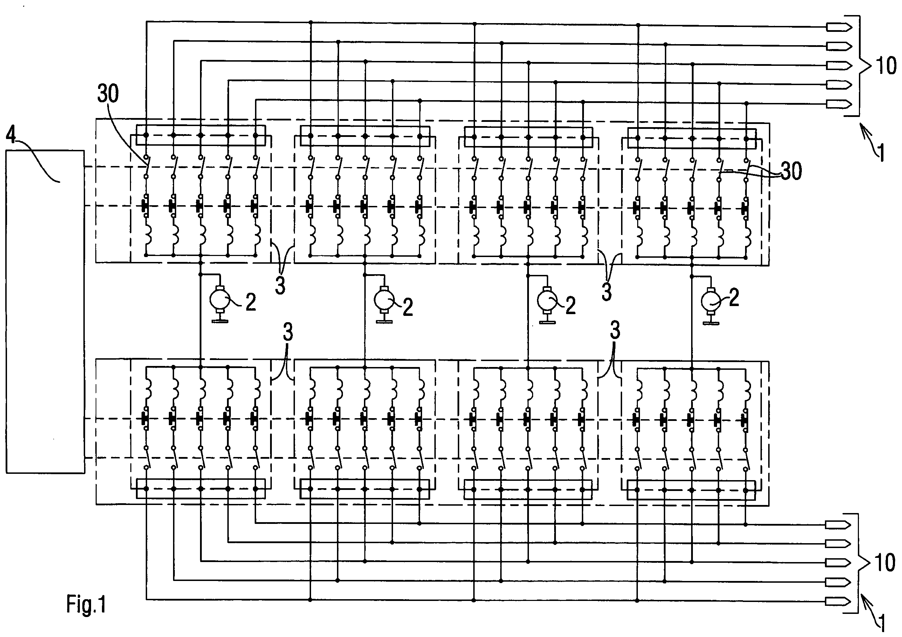

On observe en figure 1 une installation pour la mise en œuvre du procédé selon l'invention. Cette installation est par exemple celle décrite dans la demande de brevet déposée ce même jour par le demandeur pour une nouvelle architecture de réseau électrique pour milieux confinés incorporant des sources d'énergie électrique.

Cette installation comprend un réseau filaire d'un ou plusieurs conducteurs, plusieurs générateurs 2 distincts les unes des autres, un moyen de sélection 3 apte à affecter l'un au moins des générateurs disponibles 2 à l'un au moins des conducteurs, et un moyen de contrôle et de gestion 4 agissant sur le moyen de sélection 3 pour connecter des générateurs à des conducteurs.

De préférence, dans la forme de réalisation objet de la figure 1, ce réseau est divisé par configuration en sous réseaux par le moyen de contrôle et de gestion. Il est possible de réaliser une division physique du réseau en sous réseau ce qui permet d'obtenir une ségrégation des différents sous réseaux.

Chaque moyen de sélection est constitué par des éléments de coupure 30 présentant chacun une entrée et une sortie. On observe en figure 1 que les entrées des éléments de coupure 30 de chaque moyen de sélection sont connectées les unes aux autres et à un générateur dédié 2. On observe également sur cette figure que la sortie de chaque élément de coupure est connectée à l'un des conducteurs du réseau.

On observe également que chaque conducteur est connecté à autant d'élément de coupure que de générateurs associés.

Les éléments de coupure 30 sont activables à distance dans le sens de l'ouverture ou de la fermeture par un signal optique ou électrique délivré par le moyen de contrôle et de gestion 4. Ce moyen de contrôle et de gestion en agissant sur les éléments de coupure 30 assure la distribution de l'énergie électrique sur chacun des conducteurs du réseau en respectant une table d'affectation de ces conducteurs à des sous réseaux selon l'état de disponibilité des générateurs. Ces tables conformément au procédé selon l'invention sont relatives aux diverses combinaisons d'ordre d'utilisation prédéfinies.

Chaque sous réseau se trouve donc caractérisé par une combinaison particulière dans l'ordre de substitution des générateurs 2.

Il va de soi que chaque élément de coupure comporte en série un moyen de protection, ce moyen de protection pouvant comporter ou être constitué d'un élément fusible d'un calibre approprié.

Le moyen de protection et de sélection peut comporter ou être constitué par un ou des disjoncteurs en tranches disposés en parallèle tels que décrits dans la demande de brevet déposée ce même jour par le demandeur pour « Disjoncteur électronique en tranche et installation le comportant ».

Cette installation comporte des moyens de protection contre les courts circuits entre générateurs. Ces moyens de protection sont avantageusement constitués par les moyens de protection des éléments de coupure.

Une protection active peut utiliser l'élément de coupure.

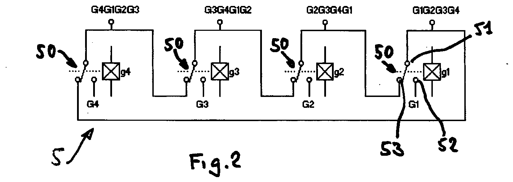

En figure 2 est représenté de manière schématique un répartiteur (qui ne fait pas partie de la portée de l'invention) associé à quatre générateurs. On observe sur cette figure que le répartiteur comprend plusieurs permutateurs 50 comportant chacun une sortie 51, une première entrée 52 et une seconde entrée 53. Ces permutateurs sont agencés en cascade selon un ordre prédéterminé et sont aptes à être associés chacun à un générateur 2 dédié.

La sortie 51 de chaque permutateur est destinée à être connectée à l'un des sous réseaux 10 établis. La première entrée 52 est connectée sur le générateur 2 associé et la seconde entrée 53 est connectée à la sortie 51 du permutateur 50 suivant dans l'ordre de la cascade.

La sortie 51 de chaque permutateur est commutée soit sur sa première entrée lorsque le générateur associé est rendu disponible, soit sur la seconde entrée dans le cas contraire.

On observe également que la seconde entrée du dernier permutateur 50 dans l'ordre de la cascade est connectée à la sortie du premier permutateur 50 dans l'ordre de la cascade formant ainsi un anneau définissant un ordre de permutation circulaire.

Chaque sous réseau 10 associé au répartiteur n'est connecté qu'à un générateur maximum à la fois dans toutes circonstances. Chaque sous réseau 10 est seulement destiné à être connecté à une sortie unique du répartiteur.

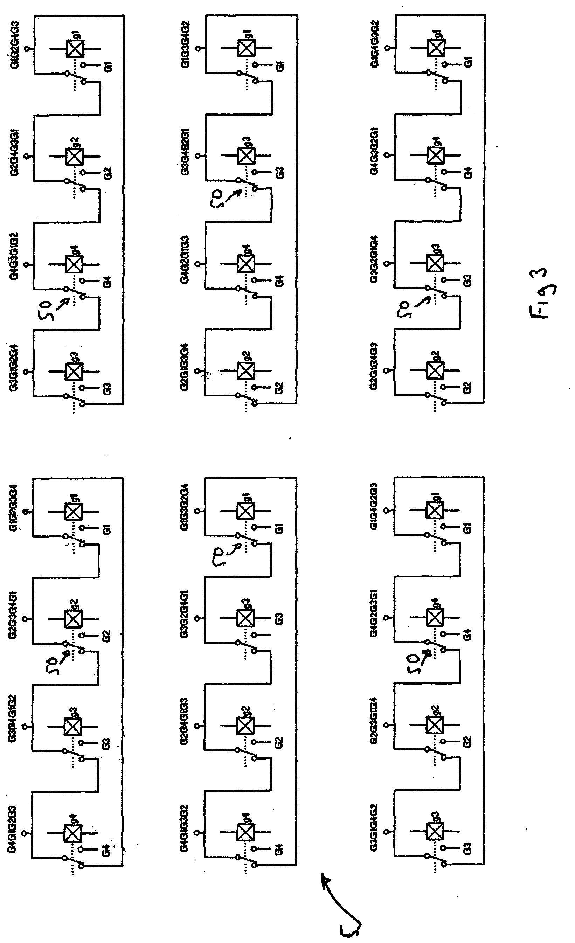

On observe en figure 3 un répartiteur (qui ne fait pas partie de la portée de l'invention) complet pour quatre générateurs.

On observe sur cette figure que les permutateurs sont agencés en plusieurs cascades de quatre éléments et que le nombre de cascades est égal aux six permutations circulaires possibles. Ainsi sont obtenues 24 sorties différentes correspondantes aux 24 permutations possibles dans l'ordre des générateurs 2.

Ainsi, si on prend l'exemple de 4 générateurs équilibrés que l'on appellera G1,G2,G3 et G4, les permutations sont aux nombre de 24 (= 4!). Un sous réseau 10 pourra donc être alimenté selon la séquence G1,G2,G3 et G4, un autre selon la séquence G1,G2,G4 et G3 et ainsi de suite.
Les séquences notées Gx,Gy,Gz,Gt sont données ci dessous pour cet exemple. G1 G2 G3 G4 G1 G2 G4 G3 G1 G3 G2 G4 G1 G3 G4 G2 G1 G4 G2 G3 G1 G4 G3 G2 G2 G1 G3 G4 G2 G1 G4 G3 G2 G3 G1 G4 G2 G3 G4 G1 G2 G4 G1 G3 G2 G4 G3 G1 G3 G1 G2 G4 G3 G1 G4 G2 G3 G2 G1 G4 G3 G2 G4 G1 G3 G4 G1 G2 G3 G4 G2 G1 G4 G1 G2 G3 G4 G1 G3 G2 G4 G2 G1 G3 G4 G2 G3 G1 G4 G3 G1 G2 G4 G3 G2 G1

Si on prend un sous réseau qui obéit à la permutation G3 G2 G4 G1, cela signifie que ce sous réseau est alimenté en priorité par le générateur G3. Si celui-ci est en défaut, alors ce sous réseau sera alimenté par le générateur G2. Si le générateur G2 ne fonctionne pas non plus, alors le sous réseau sera alimenté par le générateur G4, et enfin, si aucun autre ne fonctionne, il sera alimenté par le générateur G1.

L'intérêt de ce découpage du réseau est le suivant : à chaque fois qu'un ou plusieurs générateurs sont en défaut, les générateurs restant se partagent le réseau de façon équitable.

Dans l'exemple précédent à 4 générateurs, si G2 est en panne par exemple, on voit que les séquences précédentes deviennent :
G1 - G3 G4 G1 - G4 G3 G1 G3 - G4 G1 G3 G4 - G1 G4 - G3 G1 G4 G3-- G1 G3 G4 - G1 G4 G3 - G3 G1 G4 - G3 G4 G1 - G4 G1 G3 - G4 G3 G1
G3 G1 - G4 G3 G1 G4 - G3 - G1 G4 G3 - G4 G1 G3 G4 G1 - G3 G4 - G1
G4 G1 - G3 G4 G1 G3 - G4 - G1 G3 G4 - G3 G1 G4 G3 G1 - G4 G3 - G1

Tous les sous réseaux de la deuxième ligne qui étaient alimentés par G2 sont maintenant alimentés par les autres générateurs. Il y avait auparavant 6 sous réseaux par générateur sur les 24, il y en a maintenant 8 par générateur.

Si un deuxième générateur tombe en panne, par exemple G3, on obtient la séquence suivante:
G1 --G4 G1 -G4- G1 --G4 G1 -G4- G1 G4-- G1 G4--G1 -G4 -G1 G4- --G1 G4 --G4G1 -G4G1- -G4-G1 -G1 -G4 -G1 G4- --G1 G4 --G4G1 -G4G1- -G4-G1
G4 G1-- G4 G1-- G4-G1- G4--G1 G4-G1- G4--G1

On constate que les sous réseaux représentés par les permutations de la troisième ligne ne sont plus connectés au générateur G3, mais au premier de ligne (G1 ou G4), ceci est vrai également pour la deuxième ligne lorsque le générateur G3 avait remplacé le générateur G2. On constate maintenant qu'il y a 12 branches connectées à G1 et 12 à G4.

Enfin, si l'un des deux générateurs restants tombe en panne, l'autre prendra la relève sur l'ensemble du réseau.

Avantageusement tous les permutateurs 50 associés à un même générateur 2 sont mécaniquement couplés entre eux et exploitent la même commande de permutation. On réduit ainsi à quatre le nombre de composants électromécaniques chacun de ces composants étant constitué de six permutateurs 50 actionnés par un même organe moteur.

Chaque permutateur 50 peut être constitué par deux relais du type simple contact, deux RCCB (Disjoncteur commandé à distance) ou autres circuits ou fonctions équivalents.

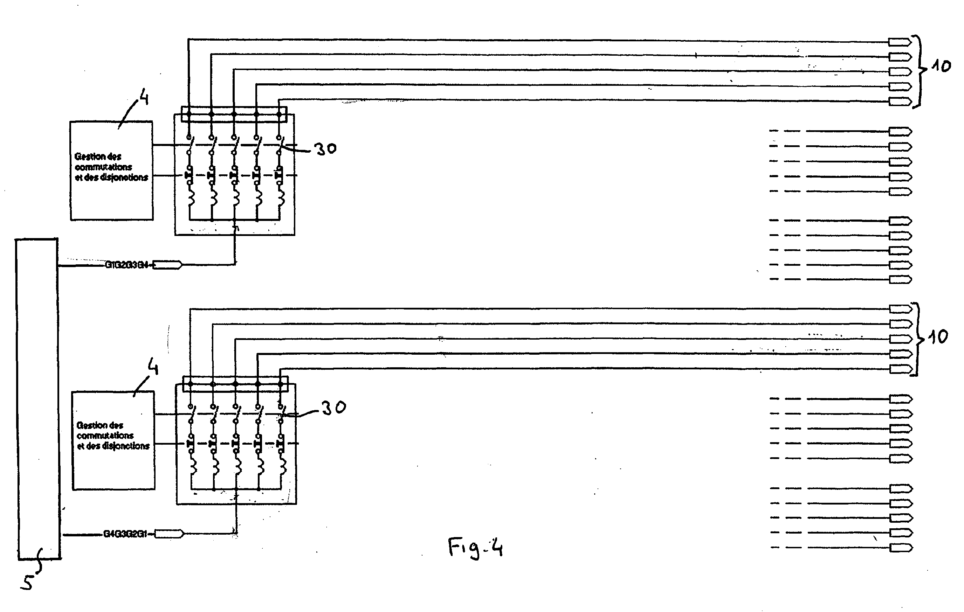

On observe en figure 4 une installation mettant en œuvre un répartiteur (qui ne fait pas partie de la portée de l'invention) et un réseau multifilaire.

Cette installation comporte un réseau électrique 1 divisé en sous réseaux. On pourra ne garder qu'une seule protection pour chacun des conducteurs de chaque sous réseau dans la mesure où chaque conducteur peut n'être connecté qu'à une seule sortie du répartiteur puisque le répartiteur remplit la fonction de sélection des générateurs.

Cette installation comporte un élément de coupure 30 présentant une entrée et une sortie, cet élément de coupure par son entrée étant connecté à la sortie correspondante du répartiteur et par sa sortie au conducteur électrique de ce sous réseau.

Dans l'exemple de la figure 4 chaque sous réseau 10 comprend plusieurs conducteurs électriques et plusieurs éléments de coupure 30 connectés de façon unique par leurs sorties, respectivement à chacun des conducteurs du sous réseau 10, ces éléments de coupures par leur entrées étant connectés à la même sortie correspondante du répartiteur.

Sur la figure 4 sont représentés deux sous réseaux 10 composés non limitativement chacun de cinq conducteurs électriques, ces sous réseaux étant connectés pour l'un à l'une des sorties du répartiteur et pour l'autre à une autre sortie de ce répartiteur. Ces deux sous réseau sont alimentés par deux sorties différentes du répartiteur.

Chaque élément de coupure 30 est apte à être commandé à distance dans le sens de l'ouverture et de la fermeture par un moyen de contrôle et de gestion 4 apte à gérer notamment les commutations et les disjonctions.

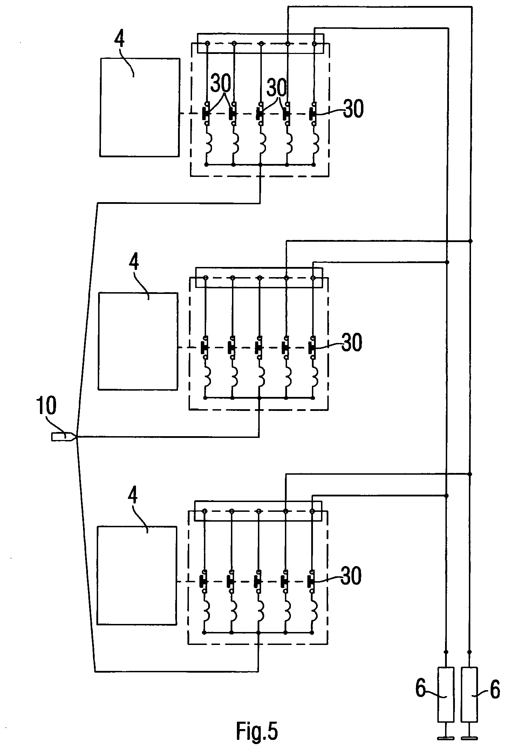

L'installation selon l'invention telle que montrée en figure 5 comporte au moins une borne de sortie prévue pour recevoir une charge électrique 6, à laquelle borne est connecté au moins un élément de coupure 30 connecté à l'un des conducteurs d'un sous réseau. Cet élément de coupure 30 est également apte à être commandé à distance dans le sens de l'ouverture ou de la fermeture par le moyen de contrôle et de gestion 4.

Dans la forme pratique de réalisation plusieurs éléments de coupure 30 sont connectés à la borne de sortie et ces éléments de coupure 30 sont connectés à des conducteurs différents d'un même sous réseau 10.

Les éléments de coupure 30 associés à la borne de sortie sur laquelle une charge 6 peut être connectée peuvent être constitués comme on peut le voir sur cette figure 5 par les disjoncteurs élémentaires du disjoncteur en tranche tel que décrit dans la demande de brevet déposée ce même jour par le même demandeur pour « Disjoncteur électronique en tranche et installation le comportant ». Chaque charge est ainsi connectée à un disjoncteur réparti basé sur un ensemble de disjoncteurs en tranche reliés au même sous réseau.

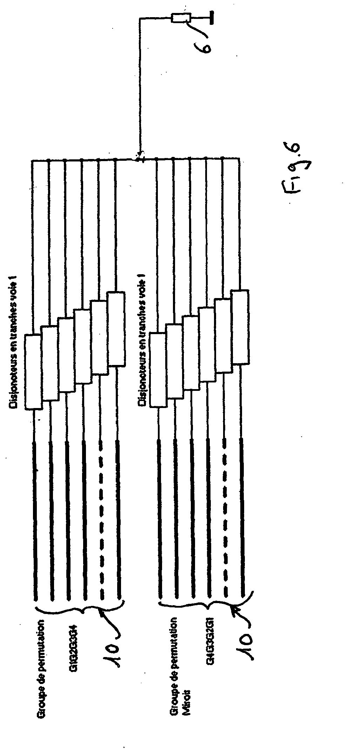

Sur la figure 6 la borne de sortie prévue pour recevoir une charge 6 est connectée à deux sous réseaux 10 sélectionnés par des disjoncteurs répartis connectés chacun à un sous réseau différent.

Cette configuration permet de modifier l'affectation des charges entre les sous réseaux ce qui donne une souplesse pour l'équilibrage du réseau.

Avantageusement une même charge 6 pourra être alimentée par deux sous réseaux dont l'ordre permutation de l'un est le miroir de l'ordre de permutation de l'autre. Ainsi dans le cas de quatre générateurs G1, G2, G3, G4, à l'un des sous réseaux peut correspondre l'ordre de permutation G1-G2-G3-G4 tandis qu'à l'autre sous réseau correspondra alors l'ordre de permutation miroir à savoir G4-G3-G2-G1. Dans ces conditions, la charge 6 est alimentée par l'un des groupes de permutation mais en cas de défaillance d'un ou plusieurs générateurs elle pourra être basculée sur le générateur actif de l'autre groupe de permutation. En effet quels que soient les générateurs défaillants, cette disposition permet de sélectionner des générateurs différents en permutant d'un sous réseau sur l'autre tant qu'il y a plus d'un générateur en fonction.

Dans cette figure 6, la borne de sortie dédiée à la charge 6 est connectée à deux sous réseau correspondants à deux ordres de permutation miroir, les éléments de coupure 30 de chaque sous réseau associés aux conducteurs d'alimentation de la charge sont répartis sur plusieurs tranches du disjoncteur, lequel est décrit dans la demande de brevet déposée ce même jour par le même demandeur pour « Disjoncteur électronique en tranche et installation le comportant ».

Dans le cas où l'on souhaite augmenter le nombre de disjoncteurs répartis par charge, on veillera à ce que quels que soient les générateurs défaillants il existe au moins une opportunité de connecter la charge d'un générateur disponible à un autre générateur disponible et ce jusqu'au dernier.

Il va de soi qu'à chaque élément de coupure sera associé en série un élément fusible. De même chaque élément de coupure 30 comme cela vient d'être décrit fait office de disjoncteur et office de relais.

Les diverses installations telles que décrites sont destinées à des milieux confinés tels qu'aéronefs et autres.

## Revendications

1. Procédé de distribution d'énergie électrique dans un réseau (1) divisé en sous-réseaux (10) dans lequel réseau n générateurs (2), n égal ou supérieur à trois, alimentent le réseau (1) lorsque les dits générateurs sont disponibles, ledit procédé comportant les étapes suivantes :
- des combinaisons, parmi les combinaisons possibles, définissant chacune un ordre différent d'utilisation de la pluralité de générateurs (2) suivant leurs disponibilités, sont établies ;
- chaque sous-réseau (10) est **caractérisé par** une des dites combinaisons ;
- plusieurs moyens de sélection respectivement associés à chaque sous-réseau, affectent les générateurs disponibles à chaque sous réseau, sous le contrôle d'un moyen de contrôle et de gestion agissant sur le moyen de sélection pour sélectionner le générateur ;
- chaque sous-réseau (10) est finalement alimenté par le premier générateur (2) disponible selon l'ordre de la combinaison qui caractérise le sous-réseau considéré ;
de sorte que lorsqu'un générateur devient indisponible, les sous-réseaux alimentés par ledit générateur avant son indisponibilité sont répartis de manière équitable entre les générateurs encore disponibles.

2. Procédé de distribution d'énergie électrique suivant la revendication 1 dans lequel des sous-réseaux sont associés à des combinaisons dans lesquelles un générateur est supprimé de sorte que, lorsque tous les autres générateurs des dites combinaisons sont indisponibles, les dits sous-réseaux sont délestés du réseau (1).

3. Installation de distribution de l'énergie électrique pour la mise en œuvre du procédé selon l'une des revendications 1 ou la revendication 2 **caractérisée en ce qu'**elle comporte :
- un réseau divisé en plusieurs sous-réseaux (10) électriquement indépendantes :
- n générateurs (2), n égal ou supérieur à trois, aptes à alimenter le réseau (1) lorsque les dits générateurs sont disponibles,
- plusieurs moyens de sélection respectivement associés à chaque sous-réseau, aptes à affecter les générateurs disponibles à chaque sous réseau,
- un moyen de contrôle et de gestion aptes à agir sur les moyen de sélection pour sélectionner le générateur ;
le moyen de contrôle et de gestion (4) aussi apte pour agir sur les moyens de sélection (3) pour connecter chaque sous-réseau au générateur disponible devant alimenter ledit sous-réseau conformément à la combinaison caractérisant chaque sous-réseau et définissant chacune un ordre différent d'utilisation de la pluralité de générateurs (2) suivant leurs disponibilités sont établies de sorte que chaque sous-réseau (10) est alimenté par le premier générateur (2) disponible selon l'ordre de la combinaison qui caractérise le sous-réseau considéré; de sorte que lorsqu'un générateur devient indisponible, les sous-réseaux alimentés par ledit générateur avant son indisponibilité sont répartis de manière équitable entre les générateurs encore disponibles.

4. Installation selon la revendication 3, **caractérisée en ce qu'**elle comporte des moyens de protection contre les courts circuits entre générateurs (2).

5. Installation selon la revendication 3 ou la revendication 4, **caractérisée en ce qu'**elle équipe un milieu confiné.

6. Aéronef comportant une installation selon la revendication 5.

## Patentansprüche

1. Verfahren zum Verteilen von elektrischer Energie in einem Netzwerk (1), das in Teilnetzwerke (10) unterteilt ist, in welchem Netzwerk n Generatoren (2), mit n größer oder gleich drei, das Netzwerk (1) versorgen, wenn die Generatoren verfügbar sind, wobei das Verfahren die folgenden Schritte beinhaltet:
- Kombinationen, aus den möglichen Kombinationen, die jeweils eine unterschiedliche Nutzungsreihenfolge der Vielzahl von Generatoren (2) entsprechend ihren Verfügbarkeiten definieren, werden erstellt;
- jedes Teilnetzwerk (10) ist durch eine der Kombinationen gekennzeichnet;
- mehrere Auswahlmittel, die jeweils mit jedem Teilnetzwerk verknüpft sind, ordnen jedem Teilnetzwerk die verfügbaren Generatoren unter der Kontrolle eines Kontroll- und Verwaltungsmittels zu, das auf das Auswahlmittel zur Auswahl des Generators einwirkt;
- jedes Teilnetzwerk (10) wird letztendlich durch den ersten verfügbaren Generator (2) entsprechend der Reihenfolge der Kombination versorgt, die das betrachtete Teilnetzwerk kennzeichnet;
sodass, wenn ein Generator nicht verfügbar wird, die Teilnetzwerke, die von dem Generator vor dessen Nicht-Verfügbarkeit versorgt worden sind, angemessen zwischen den noch verfügbaren Generatoren verteilt werden.

2. Verfahren zum Verteilen von elektrischer Energie nach Anspruch 1, wobei Teilnetzwerke mit Kombinationen verknüpft sind, in denen ein Generator entfernt wird, sodass, wenn alle anderen Generatoren der Kombinationen nicht verfügbar sind, die Teilnetzwerke aus dem Netzwerk (1) freigestellt werden.

3. Installation zum Verteilen der elektrischen Energie zur Umsetzung des Verfahrens nach einem der Ansprüche 1 oder Anspruch 2, **dadurch gekennzeichnet, dass** sie beinhaltet:
- ein Netzwerk, das in mehrere elektrisch unabhängige Teilnetzwerke (10) unterteilt ist;
- n Generatoren (2), mit n größer oder gleich drei, die imstande sind, das Netzwerk (1) versorgen, wenn die Generatoren verfügbar sind,
- mehrere Auswahlmittel, die jeweils mit jedem Teilnetzwerk verknüpft sind, die imstande sind, jedem Teilnetzwerk die verfügbaren Generatoren zuzuordnen,
- ein Kontroll- und Verwaltungsmittel, die imstande sind, auf die Auswahlmittel zum Auswählen des Generators einzuwirken;
wobei das Kontroll- und Verwaltungsmittel (4), das auch imstande ist, auf die Auswahlmittel (3) einzuwirken, um jedes Teilnetzwerk mit dem verfügbaren Generator zu verknüpfen, der das Teilnetzwerk entsprechend der Kombination zu versorgen hat, die jedes Teilnetzwerk kennzeichnet, und die jeweils eine unterschiedliche Nutzungsreihenfolge der Vielzahl von Generatoren (2) entsprechend ihrer Verfügbarkeiten definiert, die derart erstellt werden, dass jedes Teilnetzwerk (10) durch den ersten verfügbaren Generator (2) entsprechend der Reihenfolge der Kombination, die das betrachtete Teilnetzwerk kennzeichnet, versorgt wird; sodass, wenn ein Generator nicht verfügbar wird, die Teilnetzwerke, die von dem Generator vor dessen Nicht-Verfügbarkeit versorgt worden sind, angemessen zwischen den noch verfügbaren Generatoren verteilt werden.

4. Installation nach Anspruch 3, **dadurch gekennzeichnet, dass** sie Mittel zum Schützen gegen Kurzschlüsse zwischen Generatoren (2) beinhaltet.

5. Installation nach Anspruch 3 oder Anspruch 4, **dadurch gekennzeichnet, dass** sie ein eingeschlossenes Milieu ausrüstet.

6. Luftfahrzeug, eine Installation nach Anspruch 5 beinhaltend.

## Claims

1. Method for distributing electrical energy in a network (1) divided into subnetworks (10), in which network n generators (2), n greater than or equal to three, power the network (1) when said generators are available, said method including the following steps:
- combinations, from the possible combinations, each defining a different order for the use of the plurality of generators (2) according to their availabilities, are established;
- each subnetwork (10) is **characterised by** one of said combinations;
- several means of selection respectively associated with each subnetwork, assign the available generators to each subnetwork, under the control of a control and management means acting on the means of selection to select the generator;
- each subnetwork (10) is finally powered by the first available generator (2) according to the order of the combination that characterises the subnetwork considered; in such a way that when a generator becomes unavailable, the subnetworks powered by said generator before the unavailability thereof are distributed in an equal manner among the generators that are still available.

2. Method for distributing electrical energy according to claim 1 wherein subnetworks are associated with combinations in which a generator is suppressed in such a way that, when all the other generators of said combinations are unavailable, said subnetworks are off-loaded from the network (1).

3. Equipment for the distribution of electrical energy for the implementation of the method according to one of claim 1 or claim 2 **characterised in that** it includes:
- a network divided into several electrically independent subnetworks (10):
- n generators (2), n greater than or equal to three, able to power the network (1) when said generators are available,
- several means of selection respectively associated to each subnetwork, able to assign the available generators to each subnetwork,
- a control and management means able to act on the means of selection to select the generator;
the control and management means (4) also able to act on the means of selection (3) to connect each subnetwork to the available generator to power said subnetwork in accordance with the combination characterising each subnetwork and each defining a different order for the use of the plurality of generators (2) according to the availabilities thereof are established in such a way that each subnetwork (10) is powered by the first available generator (2) according to the order of the combination that characterises the subnetwork considered; in such a way that when a generator becomes unavailable, the subnetworks powered by said generator before the unavailability thereof are distributed in an equal manner among the generators that are still available.

4. Installation according to claim 3, **characterised in that** it includes means of protection against short circuits between generators (2).

5. Installation according to claim 3 or claim 4, **characterised in that** it equips a confined space.

6. Aircraft including equipment according to claim 5.
